(19)

Europäisches
Patentamt
European
Patent Office
Office européen
des brevets

(11) **EP 2 458 204 A1**

(12) **EUROPEAN PATENT APPLICATION**

(43) Date of publication:
30.05.2012 Bulletin 2012/22

(21) Application number: 11009224.4

(22) Date of filing: 22.11.2011

(51) Int Cl.:
*F03D 7/04* (2006.01)    *F03D 7/02* (2006.01)
*F03D 11/00* (2006.01)

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: 25.11.2010 CN 201010565456

(71) Applicant: **Sinovel Wind Group Co., Ltd
Haidian District, Beijing 100872 (CN)**

(72) Inventors:
• **Su, Liying
Haidian District
Beijing 100872 (CN)**
• **Xiao, Zhenjie
Haidian District
Beijing 100872 (CN)**
• **Zhang, Wen
Haidian District
Beijing 100872 (CN)**

(74) Representative: **Pfenning, Meinig & Partner GbR
Theresienhöhe 13
80339 München (DE)**

(54)    **Wind turbine generator system vibration detecting device and method**

(57)    A wind turbine generator system vibration detecting device and method are provided. The device comprises: a plurality of vibration sensors, which are arranged on a plurality of components of a wind turbine generator system to acquire vibration signals of the components; at least one vibration switch, which is arranged on a nacelle of the wind turbine generator system to detect a vibration signal of the nacelle and sends a fault signal to a control module if the detected vibration signal of the nacelle is larger than a turn-on threshold of the vibration switch in accordance with the detection; a vibration estimating module, which is connected with the plurality of vibration sensors and used for processing the vibration signals generated by the vibration sensors according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison; and the control module, which is connected with the vibration switch and the vibration estimating module and is used for shutting down the wind turbine generator system according to the fault signal.

Figure 1

Printed by Jouve, 75001 PARIS (FR)

**Description**

FIELD OF THE TECHNOLOGY

The present invention relates to wind power generation technology, and particularly to a wind turbine generator system vibration detecting device and method.

BACKGROUND

The use of wind energy, a clean and regenerative energy, is an extremely important power generating method having massive development potential. Wind power generation is implemented by a wind turbine generator system capable of converting mechanical energy of wind power into electric energy. A wind turbine generator system consists mainly of three parts, including a blade, a nacelle and a tower. A gearbox and a generator of the wind turbine generator system are arranged inside the nacelle, the blade is connected with the generator via a main shaft so that the blade can drive the generator to generate electricity when rotating under the action of wind power, thus realizing the conversion of mechanical energy of wind power into electric energy. In the process that the wind turbine generator system converts mechanical energy of wind power into electric energy, many components of the wind turbine generator system will vibrate, and the vibration will cause vibration fault when reaching certain extent, further damaging the entire wind turbine generator system. Hence, it is significant to detect the vibration state of the wind turbine generator system so as to make a rapid and correct judgment during a prodromal period and take corresponding measures to protect the wind turbine generator system.

In the prior art, the method for detecting the vibration state of a wind turbine generator system is as follows: some vibration sensors are arranged on the gearbox and the generator in the nacelle of the wind turbine generator system respectively in order to acquire vibration values of the gearbox and the generator, and the acquired vibration values are compared with a preset vibration value of the corresponding vibration sensor, the corresponding vibration sensor sends an alarm signal when the vibrations of the gearbox and the power generator exceed the preset vibration value; typically, a vibration switch is also adopted to measure whether the vibration value of the nacelle of the wind turbine generator system reaches a threshold of the vibration switch, the wind power generator system operates normally if the vibration value does not reach the threshold and automatically stops operating if the vibration value reaches the threshold.

In the above wind turbine generator system detecting method, on the one hand, the alarm signal for alarming the fault of the components and the instruction for directing the wind turbine generator system to operate or stop are sent by a single sensor or switch, so when a fault occurs in certain sensor or switch, this sensor or switch would send a signal or instruction that is inaccurate, thus provide incorrect vibration state of the component to which the sensor is corresponding, or cause erroneous operation or stoppage of the wind turbine generator system. On the other hand, the operation or automatic stoppage of the wind turbine generator system is determined based only on the vibration state of the nacelle of the wind turbine generator system, but the vibration of other parts of the wind turbine generator system is also likely to result in the damage of the wind turbine generator system, so the wind turbine generator system cannot be fully protected.

SUMMARY

In view of the need in the protection of a wind turbine generator system from vibration damage, one aspect of the present invention provides a wind turbine generator system vibration detecting device, comprising:

a plurality of vibration sensors, which are arranged on a plurality of components of a wind turbine generator system to acquire vibration states of the components and generate vibration signals, respectively;

at least one vibration switch, which is arranged on a nacelle of the wind turbine generator system to detect vibration signal of the nacelle and sends a fault signal to a control module if the detected vibration signal of the nacelle is larger than a turn-on threshold of the vibration switch;

a vibration estimating module, which is connected with the plurality of vibration sensors and used for processing the vibration signals generated by the plurality of vibration sensors according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison; and

the control module, which is connected with the vibration switch and the vibration estimating module and used for shutting down the wind turbine generator system according to the fault signal.

In accordance with another aspect of the present invention, the invention further provides a wind turbine generator system vibration detecting method, comprising the steps of:

acquiring vibration states of a plurality of components of a wind turbine generator system and generating vibration signals, respectively;

detecting vibration signal of a nacelle of the wind turbine generator system and sending a fault signal to a control module if the detected vibration signal of the nacelle is larger than a turn-on threshold of the vibration switch in accordance with the detection;

processing the generated vibration signals according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison; and

shutting down the wind turbine generator system according to the fault signal.

In accordance with the wind turbine generator system vibration detecting device and method in the present invention, the vibration signals of the components of the wind turbine generator system generated by the plurality of vibration sensors are processed according to the preset weighted values and the weighted formula in order to acquire the vibration state data of the wind turbine generator system, and the wind turbine generator system can be shut down when the vibration state data of the wind turbine generator system exceeds the preset fault value, and simultaneously, the wind turbine generator system can also be shut down when the detected vibration signal of the nacelle reaches a certain value, so the wind turbine generator system can be put under protection in combination with the vibration states of the components of the wind turbine generator system, further offering sufficient and reliable safety guarantee to the wind turbine generator system.

BRIEF DESCRIPTION OF THE DRAWINGS

FIG.1 is a structural schematic diagram of the wind turbine generator system vibration detecting device according to an embodiment of the present invention.

FIG.2 is a flow chart of the wind turbine generator system vibration detecting method according to an embodiment of the present invention.

DETAILED DESCRIPTION

In order to make the objective, the technical proposal and the advantages of the present invention more clear, explicit and complete description is made below to the present invention with reference to the drawings.

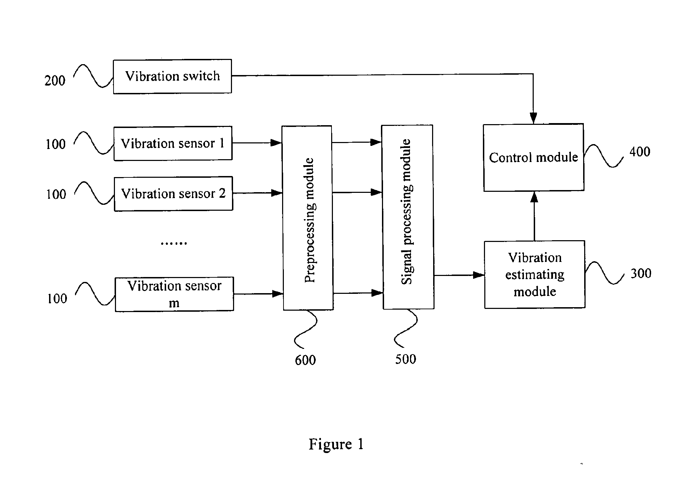

FIG.1 is a structural schematic diagram of the wind turbine generator system vibration detecting device according to an embodiment of the present invention. Shown as FIG.1, the wind turbine generator system vibration detecting device comprises a plurality of vibration sensors 100, at least one vibration switch 200, a vibration estimating module 300 and a control module 400. Detailed description is made as follows:

The plurality of vibration sensors 100 are arranged on a plurality of components of a wind turbine generator system respectively in order to acquire vibration states of the components and generate vibration signals, respectively. The plurality of components, for example, include a blade, a tower and a main shaft of the wind turbine generator system as well as a gearbox and a generator both arranged inside a nacelle. For example, the number of the vibration sensors 100 is m. The m vibration sensors 100 are used for acquiring the vibration states of a blade, a tower, a main shaft, a gearbox and a generator and generating a blade vibration signal, a tower vibration signal, a main shaft vibration signal, a gearbox vibration signal and a generator vibration signal, respectively. Each of the above mentioned components can be provided with one or more vibration sensors.

At least one vibration switch 200 is arranged on the nacelle of the wind turbine generator system in order to detect vibration signal of the nacelle, and a fault signal is sent to the control module if the detected vibration signal of the nacelle is larger than a turn-on threshold of the vibration switch. For example, the vibration switch 200 is a pendulum vibration switch that obtains switching value, i.e. a 0/1 signal is generated based on whether the detected vibration signal of the nacelle reaches the threshold of the pendulum vibration switch. When the output signal of the pendulum vibration switch is 0, the vibration is normal, and in this case, the fault signal is not sent to the control module 400. And when the output signal of the pendulum vibration switch is 1, the vibration is too large, so the wind turbine generator system is shut down after the control module 400 receives the output signal.

The vibration estimating module 400 is connected with the plurality of vibration sensors 100 and is used for processing the vibration signals generated by the plurality of vibration sensors 100 according to preset weighted values and a weighted formula in order to acquire a vibration state data of the wind turbine generator system, and comparing the vibration state data of the wind turbine generator system with a preset fault value and sending the fault signal to the control module 400 if the vibration state data is not less than the fault value in accordance with the comparison. The weighted value can be set in accordance with the model and the working condition of the wind turbine generator system, etc. And the weighted formula, for example is as follows:

$$Z=(a_1z_1+a_2z_2+\ldots+a_nz_n)$$

wherein, $a_1$, $a_2$, ..., $a_n$ are the weighted values that are all the numbers more than 0 and less than 1, the specific numerical values can be preset as required, for example, in accordance with the tolerable intensities of the generated vibration signals of the components under the situation of guaranteeing normal operation of the wind turbine generator system; $z_1$, $z_2$, ..., $z_n$ represent the generated vibration signals of the components respectively, including, for example, the blade vibration signal, the tower vibration signal, the main shaft vibration signal, the gearbox vibration signal and the generator vibration signal.

The control module 400 is connected with the vibration switch 200 and the vibration estimating module 300 and is used for shutting down the wind turbine generator system according to the fault signal. The control module 400 can receive the fault signal under two situations: 1, the vibration switch 200 sends the fault signal to the control module 400 when the vibration signal of the nacelle of the wind turbine generator system is larger than the turn-on threshold of the vibration switch; and 2, the vibration estimating module 300 sends the fault signal to the control module 400 when the vibration state data of the wind turbine generator system, which is acquired in accordance with the vibration signals of the components of the wind turbine generator system generated by the plurality of vibration sensors 100, is larger than the preset fault value. The wind turbine generator system is shut down if the control module 400 receives any fault signal.

In accordance with the wind turbine generator system vibration detecting device of the above embodiment, the vibration signals of the components of the wind turbine generator system generated by the plurality of vibration sensors are processed according to the preset weighted values and the weighted formula in order to acquire the vibration state data of the wind turbine generator system, and the wind turbine generator system can be shut down when the vibration state data of the wind turbine generator system exceeds the preset fault value, and simultaneously, the wind turbine generator system can also be shut down when the vibration of the nacelle reaches a certain value, so the wind turbine generator system can be put under protection in combination with the vibration state of the components of the wind turbine generator system, further offering sufficient and reliable safety guarantee to the wind turbine generator system.

Further, the wind turbine generator system vibration detecting device of the above embodiment also comprises a signal processing module 500. The signal processing module 500 is arranged between the vibration sensors 100 and the vibration estimating module 300 and is used for processing at least two groups of the vibration signals of a single component generated by the vibration sensors 100 according to a preset signal processing method when at least two vibration sensors 100 are arranged on the single component of the wind turbine generator system, in order to acquire a vibration state data of the single component.

For example, two vibration sensors 100 are arranged on each of the main shaft, the gearbox and the power generator respectively, more specifically, the two vibration sensors 100 arranged on the main shaft are respectively used for generating a first main shaft vibration signal and a second main shaft vibration signal, wherein the first main shaft vibration signal may be the vibration signal characterizing axial vibration state of the main shaft and the second main shaft vibration signal may be the vibration signal characterizing radial vibration state of the main shaft; the two vibration sensors 100 arranged on the gearbox are respectively used for generating a first gearbox vibration signal and a second gearbox vibration signal, wherein the first gearbox vibration signal may be the vibration signal characterizing intermediate shaft vibration state of the gearbox and the second gearbox vibration signal may be the vibration signal characterizing output shaft vibration state of the gearbox; and the two vibration sensors 100 arranged on the generator are respectively used for generating a first generator vibration signal and a second generator vibration signal, wherein the first generator vibration signal may be the vibration signal characterizing driving side vibration state of the generator and the second power generator vibration signal may be the vibration signal characterizing non-driving side vibration state of the power generator.

For example, the signal processing module 500 comprises units for processing the generated vibration signals of the components respectively, including a main shaft vibration signal processing unit, a gearbox vibration signal processing unit and a power generator vibration signal processing unit. Two groups of the generated vibration signals of a single component are input into the corresponding vibration signal processing unit and are processed by a preset signal processing method in order to acquire the corresponding vibration state data.

For example, the preset signal processing method is a fuzzification method, a BP neural network learning method or a Q learning method. The above vibration signal processing procedure is described below based upon the example that the preset signal processing method is the fuzzification method. Based upon the example of the main shaft vibration signal processing unit, the first main shaft vibration signal and the second main shaft vibration signal are input into the main shaft vibration signal processing units, and a characteristic signal parameter of the axial vibration of the first main shaft vibration signal and a characteristic signal parameter of the radial vibration of the second main shaft vibration signal are extracted by utilizing the fuzzification method and are represented by Universe X, shown as the

following formula:

$$X = \{\text{overall amplitude value } x_{11}, \text{ first-order amplitude value } x_{12}, \text{ second-order amplitude value } x_{13}, \ldots,$$
$$\text{n-order amplitude value } x_{1n}$$

$$\text{overall amplitude value } x_{21}, \text{ first-order amplitude value } x_{22}, \text{ second-order amplitude value } x_{23}, \ldots,$$
$$\text{n-order amplitude value } x_{2n}\}$$

wherein, $x_{1i}$ represents the characteristic signal parameter of the axial vibration state of the main shaft and $x_{2i}$ represents the characteristic signal parameter of the radial vibration state of the main shaft.

The vibration states of the main shaft is represented by Universe Y, shown as the following formula:

$$Y = \{y_1, \; y_2, \; y_3, \; \ldots\ldots, \; y_m\},$$

wherein $y_j$ represents one vibration state of the main shaft.

Set A represents a fuzzy set of the characteristic signal parameter, shown as the following formula:

$$A = \{\mu_{x_{11}}, \; \mu_{x_{12}}, \; \ldots, \; \mu_{x_{1n}}, \; \mu_{x_{21}}, \; \mu_{x_{22}}, \; \ldots, \; \mu_{x_{2n}}\}.$$

Set B represents a fuzzy set of the universe Y, shown as the following formula:

$$B = \{\mu_{y_1}, \; \mu_{y_2}, \; \ldots, \; \mu_{y_m}\}.$$

The degree of membership of the characteristic signal parameter $x_{1i}$ in correspondence to the vibration state $y_j$ is defined *as* $\mu_{ij} = \mu_{yj(xij)}$, so the fuzzy relation between the two universes is represented as the following matrix:

$$R = \begin{bmatrix} \mu_{11}, \mu_{12}, \cdots, \mu_{1n}, \mu_{1(n+1)}, \mu_{1(n+2)} \cdots, \mu_{1(2n)} \\ \mu_{21}, \mu_{22}, \cdots, \mu_{2n}, \mu_{2(n+1)}, \mu_{2(n+2)} \cdots, \mu_{2(2n)} \\ \vdots \\ \mu_{m1}, \mu_{m2}, \cdots, \mu_{mn}, \mu_{m(n+1)}, \mu_{m(n+2)} \cdots, \mu_{m(2n)} \end{bmatrix}$$

Fuzzy reasoning is performed by adopting max-min compose operation, B= A●R. The vibration state data of the main shaft can be obtained by means of defuzzification.

The vibration state data of the components obtained through the above processing is sent to the vibration estimating module 300 so that the vibration estimating module 300 acquires the vibration state data of the wind turbine generator system according to these vibration state data of the components.

In accordance with the wind turbine generator system vibration detecting device of the above embodiment, when a plurality of vibration sensors 100 are arranged on a single component, the plurality of vibration signals corresponding to the single component can be fused to obtain a vibration state data that can better characterizing the vibration state of the single component, so more accurate vibration state data of the wind turbine generator system can be obtained.

Further, the wind turbine generator system vibration detecting device of the above embodiment also comprises: a preprocessing module 600, which is arranged between the vibration sensors 100 and the vibration estimating module 300 and used for amplifying and filtering the vibration signals generated by the vibration sensors 100.

In accordance with the wind turbine generator system vibration detecting device of the above embodiment, noise interference can be reduced by amplifying and filtering the vibration signals generated by the vibration sensors 100 via the preprocessing module 600, further providing more accurate vibration signals.

Further, in the wind turbine generator system vibration detecting device of the above embodiment, the plurality of vibration sensors 100 comprise a plurality of low frequency vibration sensors and a plurality of high frequency vibration sensors, wherein the plurality of low frequency vibration sensors are arranged on the blade, the main shaft and the tower of the wind turbine generator system respectively to acquire the vibration states of the blade, the main shaft and the tower, and to generate the blade vibration signal, the main shaft vibration signal and the tower vibration signal, respectively; and the plurality of high frequency vibration sensors are arranged on the gearbox and the generator of the wind turbine generator system to acquire the vibration states of the gearbox and the generator, and to generate the gearbox vibration signal and the generator vibration signal, respectively.

In accordance with the wind turbine generator system vibration detecting device of the above embodiment, adopts the low frequency vibration sensors to acquire the vibration states of the components that have lower vibration frequency in the wind turbine generator system, e.g. the blade, the main shaft and the tower, and adopts the high frequency vibration sensors to acquire the vibration states of the components that have high rotating speed and therefore have high vibration frequency, e.g. the gearbox and the generator, that is to say, frequency-adaptive sensors are used for acquiring the corresponding vibration states, so the acquired vibration states have quite high accuracy.

Further, in the wind turbine generator system vibration detecting device of the above embodiment, the vibration estimating module 300 is further used for comparing the vibration state data of the wind turbine generator system with a preset alarm value, and sending an alarm signal to the control module 400 if the vibration state data is not less than the alarm value and less than the fault value in accordance with the comparison; correspondingly, the control module 400 is further used for alarming according to the alarm signal.

In accordance with the wind turbine generator system vibration detecting device of the above embodiment can provide an alarm to prompt the detection for the wind turbine generator system when the vibration state of the wind turbine generator system does not reach the degree of fault, but reaches the state that alarming is required.

Further, in the wind turbine generator system vibration detecting device of the above embodiment, the vibration estimating module 300 comprises a processing unit, a comparing unit and a sending unit, wherein: the processing unit is used for processing the vibration signals generated by the vibration sensors 100 according to the preset weighted values and the weighted formula in order to acquire the vibration state data of the wind turbine generator system; the comparing unit is used for comparing the vibration state data of the wind turbine generator system with the alarm value and the fault value in order to acquire a comparison result about whether the vibration state data of the wind turbine generator system exceeds the alarm value and/or the fault value; and the sending unit is used for sending the alarm signal or the fault signal to the control module if the comparison result that the vibration state data of the wind turbine generator system exceeds the alarm value and/or the fault value is present.

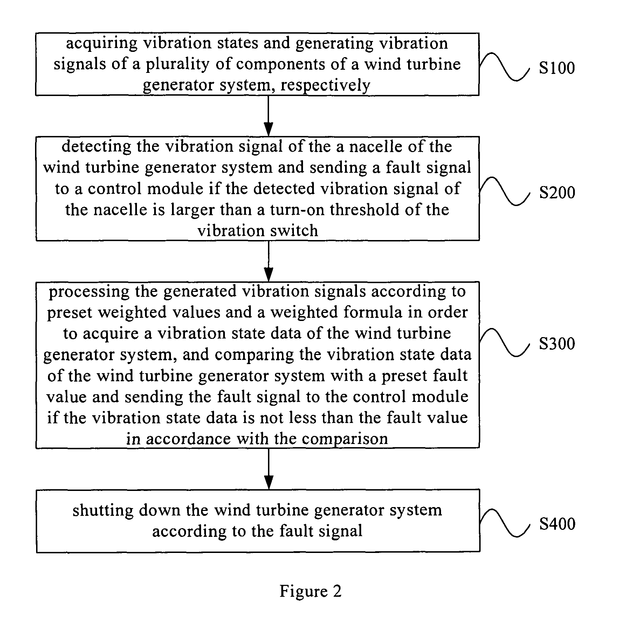

In accordance with another aspect of the present invention, a wind turbine generator system vibration detecting method is further provided. FIG.2 is a flow chart of the wind turbine generator system vibration detecting method of the present invention. Shown as FIG.2, the method comprises:

the step S100: acquiring vibration states and generating vibration signals of a plurality of components of a wind turbine generator system, respectively;

the step S200: detecting the vibration signal of the a nacelle of the wind turbine generator system and sending a fault signal to a control module if the detected vibration signal of the nacelle is larger than a turn-on threshold of the vibration switch;

the step S300: processing the generated vibration signals according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison; and

the step S400: shutting down the wind turbine generator system according to the fault signal.

Further, before the step S200 is executed, the method further comprises the step of: processing at least two groups of the vibration signals of a single component according to a preset signal processing method when at least two vibration sensors are arranged on the single component of the wind turbine generator system, in order to acquire a vibration state data of the single component.

In accordance with the wind turbine generator system vibration detecting method in the present invention, vibration states of the components of the wind turbine generator system are acquired by adopting the plurality of vibrations sensors, and the vibration state data of the wind turbine generator system is acquired in combination with the vibration states of the components. The wind turbine generator system can be shut down when the vibration state data of the wind turbine generator system exceeds the preset fault value, and simultaneously, the wind turbine generator system can also be shut down when the vibration signal of the nacelle reaches a certain value, so the wind turbine generator system can be put under protection in combination with the vibration states of the components of the wind turbine generator system, further offering sufficient and reliable safety guarantee to the wind turbine generator system.

Finally, it shall be noted that: the above embodiments are merely descriptive, not limitative, to the technical proposal of the present invention; although detailed description has been made to the present invention with reference to the aforementioned embodiments, it shall be understood by those ordinary skilled in this art that: modifications can be made to the technical proposals in various aforementioned embodiments or equivalent alternatives can be carried out on partial technical characteristics therein; and these modifications or alternatives will not make the corresponding technical proposals depart from the spirit and scope of the technical proposals of various embodiments of the present invention.

**Claims**

1.  A wind turbine generator system vibration detecting device, **characterized in that**: the device comprises:

    a plurality of vibration sensors, which are arranged on a plurality of components of a wind turbine generator system to acquire vibration states of the components and generate vibration signals, respectively;
    at least one vibration switch, which is arranged on a nacelle of the wind turbine generator system to detect vibration signal of the nacelle and sends a fault signal to a control module if the detected vibration signal of the nacelle is larger than a turn-on threshold of the vibration switch;
    a vibration estimating module, which is connected with the plurality of vibration sensors and used for processing the vibration signals generated by the plurality of vibration sensors according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison; and
    the control module, which is connected with the vibration switch and the vibration estimating module and used for shutting down the wind turbine generator system according to the fault signal.

2.  The wind turbine generator system vibration detecting device according to claim 1, **characterized in that**, the device further comprises:

    a signal processing module, which is arranged between the vibration sensors and the vibration estimating module and used for processing at least two groups of the vibration signals of a single component generated by the plurality of vibration sensors according to a preset signal processing method when at least two vibration sensors are arranged on the single component of the wind turbine generator system, in order to acquire a vibration state data of the single component.

3.  The wind turbine generator system vibration detecting device according to claim 2, **characterized in that**, the preset signal processing method is a fuzzification method, a BP (Back Propagation) neural network learning method or a Q learning method.

4.  The wind turbine generator system vibration detecting device according to claim 1, **characterized in that**, the device further comprises:

    a preprocessing module, which is arranged between the vibration sensors and the vibration estimating module and used for amplifying and filtering the vibration signals generated by the plurality of vibration sensors.

5.  The wind turbine generator system vibration detecting device according to claim 1 or 2, **characterized in that**, the plurality of vibration sensors comprise a plurality of low frequency vibration sensors and a plurality of high frequency vibration sensors, wherein the plurality of low frequency vibration sensors are arranged on a blade, a main shaft and a tower of the wind turbine generator system respectively; and the plurality of high frequency vibration sensors are arranged on a gearbox and a generator of the wind turbine generator system.

6.  The wind turbine generator system vibration detecting device according to claim 1 or 2, **characterized in that**, the vibration switch is a pendulum vibration switch.

7.  The wind turbine generator system vibration detecting device according to claim 1 or 2, **characterized in that**, the vibration estimating module is further used for comparing the vibration state data of the wind turbine generator system with a preset alarm value, and sending an alarm signal to the control module if the vibration state data is not less than the alarm value and less than the fault value in accordance with the comparison; correspondingly, the control module is further used for alarming according to the alarm signal.

8. The wind turbine generator system vibration detecting device according to claim 7, **characterized in that**, the vibration estimating module comprises a processing unit, a comparing unit and a sending unit, wherein:

the processing unit is used for processing the vibration signals generated by the plurality of vibration sensors according to the preset weighted values and the weighted formula in order to acquire the vibration state data of the wind turbine generator system;

the comparing unit is used for comparing the vibration state data of the wind turbine generator system with the alarm value and the fault value in order to acquire a comparison result about whether the vibration state data of the wind turbine generator system exceeds the alarm value and/or the fault value; and

the sending unit is used for sending the alarm signal or the fault signal to the control module if the comparison result that the vibration state data of the wind turbine generator system exceeds the alarm value and/or the fault value is present.

9. A wind turbine generator system vibration detecting method, **characterized in that**, the method comprises the steps of:

acquiring vibration states of a plurality of components of a wind turbine generator system and generating vibration signals, respectively;

detecting the vibration signal of a nacelle of the wind turbine generator system and sending a fault signal to a control module if the detected vibration signal of the nacelle is larger than a turn-on threshold of the vibration switch in accordance with the detection;

processing the generated vibration signals according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison; and

shutting down the wind turbine generator system according to the fault signal.

10. The wind turbine generator system vibration detecting method according to claim 9, **characterized in that**, before processing the generated vibration signals according to preset weighted values and a weighted formula, the method further comprises the step of:

processing at least two groups of the generated vibration signals of a single component according to a preset signal processing method when at least two vibration sensors are arranged on the single component of the wind turbine generator system, in order to acquire a vibration state data of the single component.

Figure 1

acquiring vibration states and generating vibration signals of a plurality of components of a wind turbine generator system, respectively — S100

detecting the vibration signal of the a nacelle of the wind turbine generator system and sending a fault signal to a control module if the detected vibration signal of the nacelle is larger than a turn-on threshold of the vibration switch — S200

processing the generated vibration signals according to preset weighted values and a weighted formula in order to acquire a vibration state data of the wind turbine generator system, and comparing the vibration state data of the wind turbine generator system with a preset fault value and sending the fault signal to the control module if the vibration state data is not less than the fault value in accordance with the comparison — S300

shutting down the wind turbine generator system according to the fault signal — S400

Figure 2

Europäisches
Patentamt

European
Patent Office

Office européen
des brevets

# EUROPEAN SEARCH REPORT

Application Number

EP 11 00 9224

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2010/046403 A2 (VESTAS WIND SYS AS [DK]; LI XIAO QUIAN [SG]; HVAS SANDVAD INGEMANN [SG]) 29 April 2010 (2010-04-29) <br> * abstract * <br> * page 6, line 28 - page 19, line 14 * <br> * figures * <br> ----- | 1-10 | INV. <br> F03D7/04 <br> F03D7/02 <br> F03D11/00 |
| Y | US 2010/013227 A1 (WEITKAMP ROLAND [DE]) 21 January 2010 (2010-01-21) <br> * abstract * <br> * paragraph [0069] - paragraph [0090] * <br> * figures * <br> ----- | 1-10 | |
| A | US 6 327 957 B1 (CARTER SR J WARNE [US]) 11 December 2001 (2001-12-11) <br> * abstract * <br> * figure 22 * <br> ----- | 1,9 | |
| A | EP 2 108 830 A2 (SIEMENS AG [DE]) 14 October 2009 (2009-10-14) <br> * abstract * <br> * paragraph [0042] - paragraph [0075] * <br> * figures * <br> ----- | 1-10 | TECHNICAL FIELDS SEARCHED (IPC) <br><br> F03D |
| A | US 2008/262787 A1 (MALAKHOVA OLGA [US] ET AL) 23 October 2008 (2008-10-23) <br> * abstract * <br> * paragraph [0013] - paragraph [0038] * <br> * figures 1-4 * <br> ----- | 1-10 | |

The present search report has been drawn up for all claims

| Place of search | Date of completion of the search | Examiner |
|---|---|---|
| The Hague | 29 February 2012 | Kolby, Lars |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 11 00 9224

This annex lists the patent family members relating to the patent documents cited in the above-mentioned European search report.
The members are as contained in the European Patent Office EDP file on
The European Patent Office is in no way liable for these particulars which are merely given for the purpose of information.

29-02-2012

| Patent document cited in search report | | Publication date | Patent family member(s) | | Publication date |
|---|---|---|---|---|---|
| WO 2010046403 | A2 | 29-04-2010 | US 2011285129 A1<br>WO 2010046403 A2 | | 24-11-2011<br>29-04-2010 |
| US 2010013227 | A1 | 21-01-2010 | AU 2007276440 A1<br>CA 2655637 A1<br>CN 101490411 A<br>DE 102006034251 A1<br>EP 2044325 A2<br>JP 2009544880 A<br>US 2010013227 A1<br>WO 2008009354 A2 | | 24-01-2008<br>24-01-2008<br>22-07-2009<br>24-01-2008<br>08-04-2009<br>17-12-2009<br>21-01-2010<br>24-01-2008 |
| US 6327957 | B1 | 11-12-2001 | NONE | | |
| EP 2108830 | A2 | 14-10-2009 | CN 101482448 A<br>EP 2108830 A2<br>US 2009180875 A1 | | 15-07-2009<br>14-10-2009<br>16-07-2009 |
| US 2008262787 | A1 | 23-10-2008 | FR 2905463 A1<br>US 2008069693 A1<br>US 2008262787 A1 | | 07-03-2008<br>20-03-2008<br>23-10-2008 |

EPO FORM P0459

For more details about this annex : see Official Journal of the European Patent Office, No. 12/82